# EUROPÄISCHE PATENTSCHRIFT

(11) **EP 2 612 419 B1**
(45) Veröffentlichungstag und Bekanntmachung des Hinweises auf die Patenterteilung: **27.03.2019**
(21) Anmeldenummer: 10752546.1
(22) Anmeldetag: 02.09.2010
(51) Int. Cl.: H02J 13/00, H04L 12/00, G05B 19/042, H04L 12/28

(54) **ERWEITERTES KOMMUNIKATIONSGERÄT ZUR STEUERUNG AKTIVER ENERGIEVERTEILNETZE**
EXTENDED COMMUNICATION APPARATUS FOR CONTROL OF ACTIVE POWER DISTRIBUTION NETWORKS
APPAREIL DE COMMUNICATION ÉLARGI POUR CONTRÔLER DES RÉSEAUX DE DISTRIBUTION D'ÉLECTRICITÉ ACTIFS

(43) Veröffentlichungstag der Anmeldung: 10.07.2013
(73) Patentinhaber: Siemens Aktiengesellschaft, 80333 München (DE)
(72) Erfinder: EGER, Kolja, 85521 Ottobrunn (DE); GERDES, Christoph, 81667 München (DE); HOGA, Clemens, 90403 Nürnberg (DE); LANG, Gerhard, 14557 Wilhelmshorst (DE)
(86) Internationale Anmeldenummer: PCT/EP2010/062868
(87) Internationale Veröffentlichungsnummer: WO 2012/028186

(56) Entgegenhaltungen:
- US-A1- 2007 041 387
- US-A1- 2010 037 071
- US-B1- 6 507 273

## Beschreibung

Die Erfindung betrifft ein Kommunikationsgerät zum Betrieb in einer Energieautomatisierungsanlage mit einem ersten Kommunikationsport, der zur Übermittlung von Datenpaketen zwischen dem Kommunikationsgerät und einer externen Datenverarbeitungseinrichtung eingerichtet ist, zumindest zwei weiteren Kommunikationsports, die zur Übermittlung von Datenpaketen innerhalb eines Kommunikationsnetzwerkes eingerichtet sind, einer Kommunikationsumschalteinrichtung, die zur Übermittlung von Datenpaketen zwischen dem ersten Kommunikationsport und zumindest einem der weiteren Kommunikationsports eingerichtet ist, und einer Recheneinheit, die zur Steuerung der Kommunikationsumschalteinrichtung eingerichtet ist.

Solche Kommunikationsgeräte sind landläufig beispielsweise unter den Bezeichnungen "Router" oder "Switch" bekannt und werden zur Datenübertragung in Kommunikationsnetzwerken eingesetzt.

Die stetig steigende Auslastung der vorhandenen elektrischen Energieversorgungsnetze und die steigende Anzahl dezentral elektrische Energie in die Energieversorgungsnetze einspeisender elektrischer Energieerzeuger führten in der Vergangenheit zu verstärkten Bemühungen, eine intelligentere und effizientere Netzsteuerung zu ermöglichen. Geräte und Maßnahmen zur Durchführung einer solchen intelligenten Netzsteuerung werden auch unter dem Sammelbegriff "Smart Grid" bzw. "Smart Grid Applikationen" zusammengefasst.

Eine wesentliche Zielsetzung einer intelligenteren Steuerung ist beispielsweise die Vermeidung von sogenannten Lastspitzen, d. h. Zeiten, zu denen überdurchschnittlich viel elektrische Energie aus dem Energieversorgungsnetz abgefragt wird und daher die Belastung der einzelnen Bestandteile des Energieversorgungsnetzes sehr hoch ist. Zur Bereitstellung von Spitzenlasten müssen bisher aufgrund der nur sehr eingeschränkten Speichermöglichkeit elektrischer Energie im Energieversorgungsnetz zusätzliche kostenaufwendige Einrichtungen zur Erzeugung elektrischer Energie ("Spitzenlastkraftwerke") bereitgehalten oder teure elektrische Energie von Betreibern anderer elektrischer Energieversorgungsnetze eingekauft werden. Daher kann ein möglicher Ansatz bei der intelligenteren Steuerung eines elektrischen Energieversorgungsnetzes darin gesehen werden, das Verbrauchsverhalten von Endabnehmern der elektrischen Energie dahingehend zu beeinflussen, dass sie ihre elektrischen Geräte vorzugsweise außerhalb bekannter Spitzenlastzeiten betreiben. Beispiele hierfür sind eine Verschiebung eines Einschaltschaltzeitpunktes einer Waschmaschine in einen Niederlastzeitraum oder ein vorübergehendes Ausschalten eines Gefrierschrankes während einer momentanen Spitzenlast.

Auf der anderen Seite ist der Betreiber eines elektrischen Energieversorgungsnetzes auch daran interessiert, die Einspeisung elektrischer Energie von dezentralen Einspeisepunkten in das Energieversorgungsnetz möglichst gut vorhersagen und steuern zu können. Gerade in der jüngeren Vergangenheit nimmt der Anteil von durch dezentrale Energieerzeuger bereitgestellter elektrischer Leistung rapide zu, so dass es für den Betreiber eines elektrischen Energieversorgungsnetzes von großem Interesse ist, den momentanen Zustand dieser dezentralen Einspeisungen zu kennen und ggf. auch beeinflussen zu können.

Schließlich ist es für den Netzbetreiber von großem Interesse, anhand momentaner Messwerte (z.B. Strom, Spannung) den momentanen Zustand des Energieversorgungsnetzes von der Hochspannungsebene bis hin zur Niederspannungsebene zu kennen und damit Aussagen über die Stabilität und Auslastung des Netzes treffen zu können und eine verbesserte Vorhersage und Planung zukünftiger Netzzustände durchführen zu können.

Zum Betreiben eines solchen intelligenten Energieversorgungsnetzes ist es daher von Vorteil, wenn der Netzbetreiber in gewissem Umfang Einfluss auf Endgeräte in dem Energieversorgungsnetz nehmen oder Informationen von diesen abrufen kann. Solche Endgeräte können z.B. Energie verbrauchende Endgeräte, die sich z.B. in Haushalten, Bürohäusern oder kleinen bis mittleren Gewerbe- und Industriebetrieben befinden, Energie erzeugende Endgeräte, z.B. Steuerungen von Windturbinen oder Photovoltaikanlagen, sowie auf der Niederspannungsebene installierte Messwandler, Sensoren und Messgeräte sein. Art und Umfang einer solchen Einflussnahme sind zwischen dem Netzbetreiber und seinen jeweiligen Kunden beispielsweise im Rahmen der Aushandlung von Tarifbedingungen zum Bezug elektrischer Energie aus dem Energieversorgungsnetz und/oder zur Einspeisung elektrischer Energie in das Energieversorgungsnetz festzulegen.

Um die technische Möglichkeit zu schaffen, zur Einflussnahme auf den Betrieb von Endgeräten Steuersignale an die Endgeräte zu übertragen und Informationen von den Endgeräten abzufragen, muss der Austausch von Daten zwischen den fraglichen Endgeräten und einer Steuerungseinrichtung des Netzbetreibers, z.B. einem Energiemanagementsystem (EMS) oder einem SCADA-System (SCADA = Supervisory Control and Data Acquisition), möglich sein. Der steigende Steuerungsbedarf erfordert jedoch die Installation eine Vielzahl von geeigneten Steuerungsgeräten bis auf die Niederspannungsebene des elektrischen Energieversorgungsnetzes und deren Anbindung an ein Kommunikationssystem zur Datenübertragung mit der Steuerungseinrichtung des Netzbetreibers.

Generell wäre es dazu möglich, mit derzeit verfügbaren Schutz- und Steuerungsgeräten aus dem Energieautomatisierungsbereich für die Mittel- und Hochspannungsebenen des elektrischen Energieversorgungsnetzes auch eine Automatisierungslösung für den Niederspannungsbereich des Energieversorgungsnetzes, der für die Ausbildung eines Smart Grids besonders relevant ist, bereitzustellen. Solche Schutz- und Steuerungsgeräte sind beispielsweise die von der Anmelderin vertriebenen SIPROTEC-Schutzgeräte oder SICAM-Leitgeräte.

Ein Einsatz solcher sehr leistungsfähigen Schutz- und/oder Steuerungsgeräte wäre aber für den Anwendungsbereich auf der Niederspannungsebene aus wirtschaftlichen Gründen nicht vorteilhaft, da die fraglichen Geräte aufgrund ihres komplexen Aufbaus und ihrer hohen Leistungsfähigkeit für den hier benötigten Anwendungsfall deutlich überdimensioniert wären. Die Niederspannungsebene eines intelligent gesteuerten, aktiven Energieversorgungsnetzes ist zudem stetigen Änderungen (z.B. durch sukzessiven Ausbau beim Anschluss weiterer dezentraler Energieeinspeiseanlagen) unterworfen und gegenüber einem Mittelspannungsverteilnetz wesentlich dynamischer. Dieses wiederum erfordert ein einerseits kostengünstiges und andererseits flexibel erweiterbares Automatisierungssystem unter der Nutzung entsprechend einfacher und kostengünstiger Automatisierungsgeräte.

US2007041387 offenbart ein Kommunikationsgerät zum Betrieb in einer Energieautomatisierungsanlage, wobei "Power over Ethernet" eingesetzt wird. US6507273 offenbart ein Kommunikationsgerät zur entfernten Steuerung eines Leistungsschalters in einem Energieverteilnetz.

Der Erfindung liegt daher die Aufgabe zugrunde, ein Automatisierungsgerät für den Einsatz auf der Niederspannungsebene von elektrischen Energieversorgungsnetzen anzugeben, das einerseits kostengünstig bereitgestellt werden kann und andererseits eine dynamische Anpassung eines Automatisierungssystems an Änderungen des Aufbaus der Energieversorgungsnetze ermöglicht.

Zur Lösung dieser Aufgabe wird ein Kommunikationsgerät zum Betrieb in einer Energieautomatisierungsanlage der eingangs genannten Art vorgeschlagen, wobei das Kommunikationsgerät zumindest einen Geräteanschluss aufweist, der zur Verbindung des Kommunikationsgerätes mit einem elektrischen Gerät der Energieautomatisierungsanlage eingerichtet ist, das Kommunikationsgerät einen Datenspeicherbereich aufweist, in den beliebige Automatisierungsprogramme derart installierbar sind, dass sie bei Abarbeitung durch die Recheneinheit Automatisierungsfunktionen der Energieautomatisierungsanlage bewirken, und die Kommunikationsumschalteinrichtung eine Programmschnittstelle aufweist, die zur Einrichtung einer Verbindung zwischen der Kommunikationsumschalteinrichtung und zumindest einem in dem Speicherbereich installierten Automatisierungsprogramm eingerichtet ist.

Der Erfindung liegt der Gedanke zugrunde, zur Bereitstellung der benötigten Automatisierungsgeräte vergleichsweise kostengünstige, ohnehin weit verbreitete und mit einer Recheneinheit ausgestattete Kommunikationsgeräte, wie sie z.B. als Router oder Switches in Kommunikationsnetzwerken zum Einsatz kommen, zusätzlich mit für die Automatisierung des Energieversorgungsnetzes benötigten Funktionen auszustatten und somit quasi eine Doppelnutzung solcher Kommunikationsgeräte durchzuführen. Es wird somit ein Architekturkonzept für den Aufbau von kostenoptimierten Automatisierungsgeräten für den Einsatz in aktiven Verteilnetzen unter Verwendung handelsüblicher IP-Kommunikationskomponenten (Router, Switches oder Geräten aus dem Heimbereich wie DSL-Router) vorgeschlagen. Der besondere Vorteil dieser Lösung besteht darin, dass diezur Kommunikation benötigte Hardware incl. einem "Network Management System" (NMS) als ablauffähige handelsübliche Ausgangsplattformen bereits kostengünstig verfügbar und an den notwendigen Stellen im Energieversorgungsnetz installierbar sind. Solche Kommunikationsgeräte sind über ein jeweils verfügbares externes Kommunikationsnetz (Ethernet, DSL, PDH, SDH, PLC etc.) von einer externen Datenverarbeitungseinrichtung, z.B. einem Steuerungsgerät eines SCADA-Systems des Netzbetreibers, erreichbar. Die Kommunikationsgeräte werden erfindungsgemäß mit einer Programmschnittstelle (z.B. einer sogenannten "API" = "Application Program Interface") ausgestattet, so dass jederzeit, beispielsweise mittels durch eine lokale Bedienung oder die externe Datenverarbeitungseinrichtung durchgeführten Funktionen eines Netzwerkmanagementsystems (NMS), ein Laden und Installieren eines oder mehrerer Automatisierungsprogramme initiiert werden kann.

Das derart erweiterte Kommunikationsgerät wirkt nun neben seiner Kommunikationsfunktionen (Router, Switch für Datentelegramme) gleichzeitig auch als Automalisierungsgerät (Schutz, Steuerung, Regelung, Power-Quality etc.).

Gemäß einer vorteilhaften Ausgestaltung des erfindungsgemäßen Kommunikationsgerätes ist vorgesehen, dass in dem Kommunikationsgerät eine Servereinrichtung bereitgestellt ist, die zur Speicherung von Ergebnisdaten des zumindest einen Automatisierungsprogramms und zur Bereitstellung der Ergebnisdaten zum Abruf durch die externe Datenverarbeitungseinrichtung eingerichtet ist.

In diesem Fall wird von dem Kommunikationsgerät eine Servereinrichtung bereitgestellt, die einerseits Ergebnisse der ausgeführten Automatisierungsprogramme der externen Datenverarbeitungseinrichtung zugänglich macht und andererseits Befehle und Steuerungsdaten von der externen Datenverarbeitungseinrichtung an die Automatisierungsprogramme weitergeben kann. Das jeweilige Automatisierungsprogramm repräsentiert sich in diesem Fall quasi als zweite Funktionsebene über die Servereinrichtung in Richtung des übergeordneten Management- oder Leitsystems.

Konkret kann hierbei vorgesehen sein, dass die Servereinrichtung zur Bereitstellung der Ergebnisdaten gemäß dem Kommunikationsprotokoll IEC 61850 eingerichtet ist.

Häufig findet nämlich in modernen Energieautomatisierungssystemen der Datenaustausch mit dem Betreiber eines elektrischen Energieversorgungsnetzes gemäß einem Daten- und Kommunikationsprotokoll nach dem internationalen Standard "IEC 61850" der "International Electrotechnical Commission" statt. Der internationale Standard IEC 61850 ist speziell auf die Kommunikation in Automatisierungsanlagen von elektrischen Energieversorgungsnetzen angepasst und bietet hierfür entsprechende Datenobjekte und Objektbeschreibungen an. Speziell für dezentrale Energiesteuersysteme wird im Rahmen der IEC 61850 der Teilbereich "IEC 61850 Teil 7-420, (Logical Nodes Communications Systems for Distributed Energy Resources (DER))" entwickelt.

Eine weitere vorteilhafte Ausführungsform des erfindungsgemäßen Kommunikationsgerätes sieht vor, dass das Kommunikationsgerät eine feste Anzahl von Schnittstellen aufweist und außerdem eine Konfigurationsdatei umfasst, in der festgelegt ist, welche der Schnittstellen Kommunikationsports und welche der Schnittstellen Geräteanschlüsse sind.

Hierdurch kann die Flexibilität des erfindungsgemäßen Kommunikationsgerätes weiter erhöht werden, da nicht von vornherein feste Anzahlen von Kommunikationsports und Geräteschnittstellen (d.h. lokalen Schnittstellen für den Anschluss von separaten Peripherieeinheiten bzw. Endgeräten) festgelegt sind, sondern vielmehr die vorhandenen Schnittstellen, die physikalisch beispielsweise als Ethernetschnittstellen ausgestaltet sind, individuell entweder als Kommunikationsports oder als Geräteanschluss eingerichtet werden können. Beispielsweise werden dazu während des Geräteanlaufes des Kommunikationsgerätes alle vorhandenen Schnittstellen gescannt und gemäß der in der Konfigurationsdatei festgelegten Aufteilung als Kommunikationsport oder als Geräteanschluss eingerichtet. Ein Teil der Schnittstellen ist dann als Geräteanschluss der Applikationsebene der Automatisierungsprogramme zugeordnet. Diese Geräteanschlüsse werden z.B. zur Ankopplung von externen I/0- oder Messdatenerfassungseinheiten (z.B. Strom- oder Spannungswandler) verwendet.

Außerdem kann gemäß einer weiteren vorteilhaften Ausgestaltung des erfindungsgemäßen Kommunikationsgerätes vorgesehen sein, dass das zumindest eine Automatisierungsprogramm Einrichtungsparameter umfasst, die Kommunikationseinstellungen für die jeweiligen mit dem zumindest einen Automatisierungsprogramm verbundenen Geräteanschlüsse beinhalten.

Gemäß dieser Ausführungsform beinhalten die in dem Kommunikationsgerät installierbaren Automatisierungsprogramme folglich auch die Kommunikationseinstellungen (z.B. Protokollstacks) für die benötigten Geräteanschlüsse. Die Einstellungen können z.B. über die Servereinrichtung mittels NMS oder Web-Browser angepasst bzw. gegenüber einem Defaultwert verändert werden.

Gemäß einer weiteren vorteilhaften Ausführungsform kann zudem vorgesehen sein, dass das zumindest eine Automatisierungsprogramm zur Ausbildung einer Datenverbindung mit einem auf einer externen Recheneinrichtung ablaufenden weiteren Automatisierungsprogramm dient.

Bei dieser Ausprägung der Erfindung stellt das lokal auf dem Kommunikationsgerät installierte Automatisierungsprogramm selbst sozusagen lediglich eine Schnittstelle über einen möglichst leistungsfähigen Datenübertragungskanal mit einer externen Recheneinrichtung (z.B. einem Energy Automatisierungsserver, der an einer beliebigen Stelle im Internet steht) her. Die eigentliche Automatisierungsfunktion wird dann von einem auf der externen Recheneinrichtung ablaufenden weiteren Automatisierungsprogramm ausgeführt. Diese Ausführung bietet sich insbesondere zur Durchführung von Automatisierungsfunktionen (z.B. aufwendigen Schutzfunktionen) an, die von einer möglichst leistungsfähigen Recheneinrichtung durchgeführt werden müssen und daher von der Recheneinheit des Kommunikationsgerätes nicht oder nur in eingeschränkter Weise durchgeführt werden können. In diesem Fall werden zwischen dem Automatisierungsprogramm in dem Kommunikationsgerät vor Ort und der externen Recheneinrichtung lediglich Datenpakete mit den relevanten Informationen ausgetauscht, die hauptsächliche Rechenarbeit übernimmt die externe Recheneinrichtung.

Eine weitere vorteilhafte Ausführungsform des erfindungsgemäßen Kommunikationsgerätes sieht vor, dass das zumindest eine Automatisierungsprogramm zur Ausführung einer Schutzfunktion oder einer Steuerfunktion für ein Gerät der Energieautomatisierungsanlage dient.

Hierbei kann beispielsweise die Steuersoftware einer Photovoltaikanlage oder eine Überstromzeitschutzfunktion durch das Automatisierungsprogramm realisiert sein.

Schließlich sieht eine weitere vorteilhafte Ausführungsform des erfindungsgemäßen Kommunikationsgerätes vor, dass das Kommunikationsgerät Bestandteil eines elektrischen Energiezählers ist.

In diesem Fall kann das Kommunikationsgerät z.B. in einem sogenannten "Smart Meter" integriert sein.

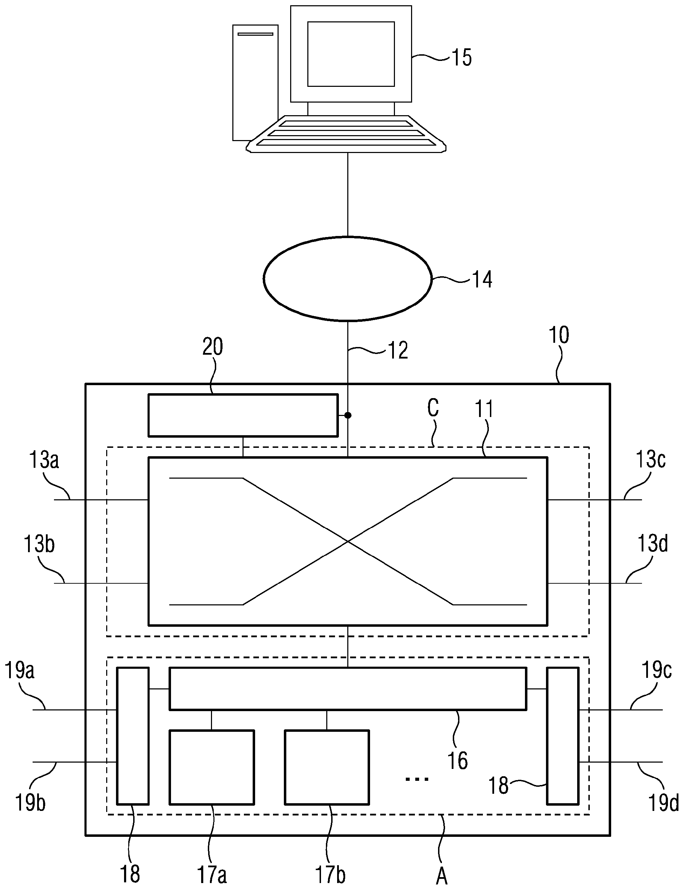

Im Folgenden soll die Erfindung anhand eines Ausführungsbeispiels näher erläutert werden. Hierzu zeigt die Figur eine schematische Ansicht eines Kommunikationsgerätes.

Zur Steuerung elektrischer Endgeräte im Rahmen eines Smart Grid Konzeptes eines Betreibers eines elektrischen Energieversorgungsnetzes, bei denen es sich z.B. um elektrische Energie verbrauchende oder elektrische Energie erzeugende Geräte, aber auch um Messgeräte, Wandler und Sensoren handeln kann, werden auf Niederspannungsebene möglichst kostengünstige Steuer- und Überwachungsgeräte benötigt, die Steuerdaten von dem Netzbetreiber an die Endgeräte weitergeben oder Zustandsmeldungen, Messwerte und weitere Informationen von solchen Endgeräten empfangen. Dies kann z.B. im Rahmen eines "Demand-Response-Managements", bei dem die Endgeräte entsprechend dem momentanen Angebot elektrischer Energie im Energieversorgungsnetz zu- oder abgeschaltet werden können, oder einem "Decentralized-Energy-Resources-Management", bei dem der momentane Zustand dezentraler Energieerzeuger an den Netzbetreiber übermittelt wird und ggf. eine Steuerung der dezentralen Energieerzeuger durch den Netzbetreiber ermöglicht wird, Anwendung finden.

Diese Steuer- und Überwachungsgeräte werden entsprechend des im Folgenden näher erläuterten Kommunikationsgerätes ausgeführt. Dazu zeigt die Figur in schematischer Darstellung ein Kommunikationsgerät 10, das eine Kommunikationsumschalteinrichtung 11, z.B. einen Switch oder einen Router, aufweist, mit der ein erster Kommunikationsport 12 des Kommunikationsgerätes 10 sowie vier weitere Kommunikationsports 13a, 13b, 13c und 13d des Kommunikationsgerätes 10 in Verbindung stehen. Die Kommunikationsumschalteinrichtung 11 weist eine - in der Figur nicht gezeigte - Recheneinrichtung, z.B. eine CPU auf, die eine Steuerung der Kommunikationsumschalteinrichtung 11 dergestalt bewirkt, dass Datenpakete zwischen dem ersten Kommunikationsport 12 und zumindest einem der weiteren Kommunikationsports 13a-13d übermittelt werden können. Zusammengenommen bilden die genannten Komponenten des Kommunikationsgerätes 10 (Umschalteinrichtung 11 mit Recheneinrichtung, Kommunikationsports 12, 13a-13d) einen in der Kommunikations- bzw. Datennetzwerktechnik üblichen Switch bzw. Router. Über die Kommunikationsumschalteinrichtung 11 können beliebige an die Kommunikationsports 13a - 13d angeschlossene Netzwerkgeräte (z.B. PCs, Multimediageräte etc.) miteinander und/oder mit einem externen Netzwerk (z.B. dem Internet) verbunden werden, so dass das Kommunikationsgerät 10 die Aufgaben eines normalen Routers oder Switches (z.B. eines DSL-Routers zur Internetanbindung eines Haushaltes) wahrnehmen kann. Dieser Kommunikations-Teil C des Kommunikationsgerätes 10 ist durch einen gestrichelten Rahmen in der Figur hervorgehoben.

Um das Kommunikationsgerät 10 dazu zu ertüchtigen, Automatisierungsfunktionen zur Steuerung und Überwachung von Endgeräten in einem elektrischen Energieversorgungsnetz vorzunehmen, weist das Kommunikationsgerät 10 über den Kommunikationsteil C hinaus einen durch einen weiteren gestrichelten Rahmen hervorgehobenen Applikationsteil A auf. Dieser umfasst eine mit der Kommunikationsumschalteinrichtung 11 gekoppelte Programmschnittstelle 16, die als sogenannte "API" ("Application Program Interface") ausgebildet sein kann. Außerdem weist der Applikationsteil A des Kommunikationsgerätes 10 einen - in der Figur nicht explizit dargestellten - Speicherbereich auf, in den beliebige Automatisierungsprogramme 17a, 17b geladen werden können. Diese werden im Rahmen eines Installationsvorgangs logisch mit der Programmschnittstelle 16 verknüpft. Die Programmschnittstelle 16 steht zudem über entsprechende Anschlusssteuerungen 18 mit Geräteanschlüssen 19a, 19b, 19c, 19d in Verbindung, so dass die Automatisierungsprogramme 17a, 17b über die Programmschnittstelle 16 auf die Geräteanschlüsse 19a bis 19d zugreifen können.

Das Kommunikationsgerät 10 weist zudem eine Servereinrichtung 20 auf, die mit der Kommunikationsumschalteinrichtung 11 in Verbindung steht und auf der z.B. Ergebnisdaten von Berechnungen und/oder Auswertungen der Automatisierungsprogramme 17a, 17b abgelegt und über ein externes Kommunikationsmedium 14 einer externen Datenverarbeitungseinrichtung 15 bereitgestellt werden können. Die Servereinrichtung 20 kann dabei beispielsweise eine Datenstruktur und Kommunikationsweise entsprechend dem Standard IEC 61850 ermöglichen.

Ein Betrieb der Komponenten des Applikationsteils A, also insbesondere die Programmschnittstelle 16 und die Automatisierungsprogramme 17a, 17b wird mit derjenigen Recheneinrichtung des Kommunikationsgerätes 10 durchgeführt, die auch dem Kommunikationsteil C zugeordnet ist, so dass keine weiteren Kosten durch zusätzliche Recheneinrichtungen (z.B. eine zweite CPU) entstehen.

Das derart um den Applikationsteil A erweiterte Kommunikationsgerät 10 kann wie im Folgenden erläutert zur Steuerung von Endgeräten eines Energieversorgungsnetzes verwendet werden:

Der erste Kommunikationsport 12 ist über das externe Kommunikationsmedium 14 (z.B. ein externes Ethernet-Netzwerk, eine DSL-Verbindung (DSL = Digital Subscriber Line), eine PDH-Verbindung (PDH = Plesiochronous Digital Hierarchy), eine SDH-Verbindung (SDH = Synchronous Digital Hierarchy), eine PLC-Verbindung (PLC = Power Line Communication) oder eine beliebige andere Kommunikationsverbindung) mit einer externen Datenverarbeitungseinrichtung 15 in Verbindung gebracht, bei der es sich beispielsweise um eine Steuerungseinrichtung eines SCADA-Systems eines Betreibers eines elektrischen Energieversorgungsnetzes handeln kann. "Extern" bedeutet in diesem Zusammenhang, dass sich die fraglichen Komponenten (externes Kommunikationsmedium, externe Datenverarbeitungseinrichtung) außerhalb eines durch das Kommunikationsgerät 10, mögliche an den Kommunikationsports 13a-13d angeschlossene Netzwerkgeräte und mögliche an die Geräteanschlüsse 19a-19d angeschlossene Endgeräte gebildeten "internen" Netzverbundes befinden.

Mit dem Energieversorgungsnetz stehen - z.B. über eine entsprechende elektrische Übergabestelle und entsprechende elektrische Hausinstallationsleitungen eines privaten Wohnhauses bzw. über eine elektrische Ankopplung z.B. einer Windkraftanlage - in der Figur nicht gezeigte Endgeräte elektrisch in Verbindung. Diese Endgeräte können hierbei Energie verbrauchende Endgeräte, wie beispielsweise Waschmaschinen, Kühlschränke, Gefrierschränke, Klimaanlagen, elektrische Heizungen oder Elektroherde oder Energie erzeugende Endgeräte, wie beispielsweise eine Windkraftanlage, ein elektrisches Generatormodul eines Blockheizkraftwerkes oder eine photovoltaische Solaranlage, aber auch Messgeräte, wie z.B. Messwandler und Sensoren, sein.

Die Endgeräte sind zudem an die Geräteanschlüsse 19a-19d des Kommunikationsgerätes 10 angeschlossen, so dass sie mit den Automatisierungsprogrammen 17a, 17b Daten und Signale austauschen können. Die Endgeräte können dabei über beliebige Kommunikationsverbindungen, also z.B. beliebige drahtlose Verbindungen (z.B. WLAN, ZigBee, Bluetooth, Meshed Networks und EnOcean) oder drahtgebundene Verbindungen (z.B. LAN, Power-LAN, Homeplug und Punkt-zu-Punkt-Verbindungen wie RS232, RS422 und RS485) mit den Geräteanschlüssen 19a bis 19d verbunden sein.

Zur Steuerung und/oder Überwachung der Endgeräte sind die entsprechenden Automatisierungsprogramme 17a, 17b auf dem Kommunikationsgerät 10 installiert. Bei den Automatisierungsprogrammen 17a, 17b kann es sich insbesondere um Steuerprogramme für die Endgeräte (z.B. Steuerungen einer Photovoltaikanlage), Schutz- und Überwachungsprogramme zur Überwachung des Zustands der Endgeräte oder Messwerterfassungsprogramme zur Ansteuerung von Messmodulen, Messwandlern und Sensoren handeln. In den Automatisierungsprogrammen sind den jeweils angeschlossenen Endgeräten entsprechende gerätespezifische Einstellungen und Konfigurationen für die Geräteanschlüsse 19a-19d bereits umfasst. Alternativ oder zusätzlich können solche Konfigurationen auch über Netzwerk Management Systeme (entweder über eine Nahsteuerung direkt am Kommunikationsgerät oder von einer mit dieser in Verbindung stehenden Datenverarbeitungseinrichtung - z.B. der externen Datenverarbeitungseinrichtung 15) vorgenommen werden.

Die Automatisierungsprogramme 17a, 17b wirken derart mit der externen Datenverarbeitungseinrichtung 15 zusammen, dass eine Steuerung und Überwachung der angeschlossenen Endgeräte möglich ist. Um z.B. den momentanen Bezug elektrischer Energie aus dem Energieversorgungsnetz durch angeschlossene Endgeräte, die momentane Einspeisung elektrischer Energie in das Energieversorgungsnetz durch angeschlossene Endgeräte oder auch eine Zustandserfassung der Endgeräte durchführen zu können, steht die externe Datenverarbeitungseinrichtung 15 mit dem ersten Kommunikationsport 12 des Kommunikationsgerätes 10 in Verbindung und kann über diesen mit den Automatisierungsprogrammen 17a, 17b Datentelegramme austauschen. Dazu werden die Datentelegramme, z.B. Befehle oder Konfigurationsdaten, mittels der Kommunikationsumschalteinrichtung 11 entweder direkt oder über die Servereinrichtung 20 an die Programmschnittstelle 16 weitergeleitet, die eine Verteilung an die betreffenden Automatisierungsprogramme 17a, 17b vornimmt. Entsprechend können Datentelegramme, z.B. Ergebnisdaten von Berechnungen und Auswertungen, Mess- bzw. Abtastwerte oder Meldungen, von den Automatisierungsprogrammen 17a, 17b mittels der Programmschnittstelle 16 und der Kommunikationsumschalteinrichtung 11 auf der Servereinrichtung 20 abgelegt werden und stehen dann der externen Datenverarbeitungseinrichtung 15 zum Abruf bereit oder werden direkt an diese übertragen.

Die Einbindung des Applikationsteils A mit den Automatisierungsprogrammen 17a, 17b in das Kommunikationsgerät 10 ermöglicht eine dynamische Anpassung des Kommunikationsgerätes 10 an neu hinzukommende oder veränderte Endgeräte. Wird beispielsweise
eine dezentrale Energieeinspeiseeinrichtung (z.B. eine Photovoltaikanlage) geändert oder erneuert, so kann die Steuerung hierfür als neues Automatisierungsprogramm 17a, 17b auf das Kommunikationsgerät 10 geladen werden. Dieser Ladevorgang kann entweder Vorort oder über an die Kommunikationsports 12, 13a bis 13b angeschlossene Einrichtungen initiiert werden. Alternativ kann sich auch eine neue dezentrale Energieeinspeiseeinheit über das externe Kommunikationsmedium 14 mit einer eindeutigen Kennung an einem externen Download-Server (der z.B. auf der externen Datenverarbeitungseinrichtung 15 bereitgestellt sein kann) anmelden. Über diesen Server wird dann das neue Automatisierungsprogramm auf das Kommunikationsgerät 10 geladen und dort installiert. Das Automatisierungsprogramm kann käuflich erworben oder aber auch über ein Leasing Modell angemietet werden.

Die Aufteilung der Kommunikationsports 13a - 13d und der Geräteanschlüsse 19a - 19d kann entweder fest vorgegeben sein oder variabel durch eine Konfigurationsdatei, die z.B. auf der Servereinrichtung 20 vorgehalten werden kann, eingestellt werden. In diesem Fall würden die Schnittstellen des Kommunikationsgerätes 10 beliebig auf Kommunikationsports und Geräteanschlüsse aufgeteilt werden können.

Eine weitere Ausprägung der Automatisierungsprogramme 17a, 17b kann vorsehen, dass diese lediglich eine Schnittstellenfunktion wahrnehmen und die von den Endgeräten aufgenommenen Daten über eine leistungsfähige Kommunikationsverbindung zu einem Energy Automatisierungsserver, der z.B. auf der externen Datenverarbeitungseinrichtung 15 ausgebildet sein oder auch an einer beliebigen Stelle z.B. im Internet bereitgestellt werden kann, übertragen. Auf dem Energy Automatisierungsserver läuft in diesem Fall das eigentliche Automatisierungsprogramm, z.B. ein komplexes Überwachungs- oder Schutzprogramm, und es werden lediglich die zur Steuerung und/oder Überwachung der Endgeräte benötigten Daten mit dem auf dem Kommunikationsgerät 10 ablaufenden Automatisierungsprogramm 17a, 17b ausgetauscht. Speziell in diesem Falle ist ein Leasing-Modell bezüglich des auf dem Energy Automatisierungsserver ablaufenden Automatisierungsprogramms interessant.

In einem weiteren Ausführungsbeispiel kann man aus Performancegründen einen Teil der Automatisierungsprogramme (vorzugsweise Standardanwendungen z.B. Überstromzeitschutz) hardwaregestützt (z.B. als FPGA-Funktion) als Erweiterung der Programmschnittstelle 16 implementieren.

Der besondere Vorteil des beschriebenen Kommunikationsgerätes 10 liegt darin, dass, insbesondere für sogenannte "Smart-Grid-Anwendungen" kostengünstige Automatisierungskomponenten bereitgestellt werden. Werden handelsübliche Kommunikationseinheiten (z.B. ausgereifte Router, Switches) als Plattform für die Kommunikationsgeräte 10 genutzt, kann vom üblicherweise schnell voranschreitenden Fortschritt der Kommunikationstechnologien solcher Kommunikationseinheiten profitiert werden. Einstellungen und Konfigurationen können einfach mittels handelsüblicher Browser oder als Bestandteil eines Netzwerk-Management-Systems realisiert werden.

Das beschriebene Kommunikationsgerät kann entweder separat in Form eines um den Applikationsteil A erweiterten Routers oder Switches ausgebildet oder z.B. in einen Energiezähler, z.B. einen Smart Meter, integriert sein.

## Patentansprüche

1. Kommunikationsgerät (10) zum Betrieb in einer Energieautomatisierungsanlage, die zur Steuerung und/oder Überwachung elektrischer Geräte eines elektrischen Energieversorgungsnetzes ausgebildet ist, mit einem Kommunikationsteil (C), der
- einen ersten Kommunikationsport (12) aufweist, der zur Übermittlung von Datenpaketen zwischen dem Kommunikationsgerät (10) und einer externen Datenverarbeitungseinrichtung (15) eingerichtet ist;
- zumindest zwei weitere Kommunikationsports (13a-13d) aufweist, die zur Übermittlung von Datenpaketen mit Netzwerkgeräten innerhalb eines Kommunikationsnetzwerkes eingerichtet sind;
- eine Kommunikationsumschalteinrichtung (11) aufweist, die zur Übermittlung von Datenpaketen zwischen dem ersten Kommunikationsport (12) und zumindest einem der weiteren Kommunikationsports (13a-13d) eingerichtet ist; und
- eine Recheneinheit aufweist, die zur Steuerung der Kommunikationsumschalteinrichtung (11) eingerichtet ist,
**dadurch gekennzeichnet, dass** das Kommunikationsgerät (10) einen Applikationsteil (A) aufweist, der
- zumindest einen Geräteanschluss (19a-19d) aufweist, der zur Verbindung des Kommunikationsgerätes (10) mit einem elektrischen Gerät der Energieautomatisierungsanlage, das mit dem Energieversorgungsnetz elektrisch in Verbindung steht, eingerichtet ist;
- einen Datenspeicherbereich aufweist, in den beliebige Automatisierungsprogramme (17a, 17b) derart installierbar sind, dass sie bei Abarbeitung durch die Recheneinheit Automatisierungsfunktionen der Energieautomatisierungsanlage in der Weise bewirken, dass sie zur Steuerung und/oder Überwachung des elektrischen Gerätes mit dem elektrischen Gerät über den zumindest einen Geräteanschluss Daten und Signale austauschen; und
- eine mit der Kommunikationsumschalteinrichtung (11) gekoppelte Programmschnittstelle (16) aufweist, die zur Einrichtung einer Verbindung zwischen der Kommunikationsumschalteinrichtung (11) und zumindest einem in dem Speicherbereich installierten Automatisierungsprogramm (17a, 17b) eingerichtet ist.

2. Kommunikationsgerät (10) nach Anspruch 1,
**dadurch gekennzeichnet, dass**
- in dem Kommunikationsgerät (10) eine Servereinrichtung (20) bereitgestellt ist, die zur Speicherung von Ergebnisdaten des zumindest einen Automatisierungsprogramms (17a, 17b) und zur Bereitstellung der Ergebnisdaten zum Abruf durch die externe Datenverarbeitungseinrichtung (15) eingerichtet ist.

3. Kommunikationsgerät (10) nach Anspruch 2,
**dadurch gekennzeichnet, dass**
- die Servereinrichtung (20) zur Bereitstellung der Ergebnisdaten gemäß dem Standard IEC 61850 eingerichtet ist.

4. Kommunikationsgerät (10) nach einem der vorangehenden Ansprüche,
**dadurch gekennzeichnet, dass**
- das Kommunikationsgerät (10) eine feste Anzahl von Schnittstellen aufweist; und
- das Kommunikationsgerät (10) eine Konfigurationsdatei umfasst, in der festgelegt ist, welche der Schnittstellen Kommunikationsports (13a-13d) und welche der Schnittstellen Geräteanschlüsse (19a-19d) sind.

5. Kommunikationsgerät (10) nach einem der vorangehenden Ansprüche,
**dadurch gekennzeichnet, dass**
- das zumindest eine Automatisierungsprogramm (17a, 17b) Einrichtungsparameter umfasst, die Kommunikationseinstellungen für die jeweiligen mit dem zumindest einen Automatisierungsprogramm (17a, 17b) verbundenen Geräteanschlüsse (19a-19d) beinhalten.

6. Kommunikationsgerät (10) nach einem der vorangehenden Ansprüche,
**dadurch gekennzeichnet, dass**
- das zumindest eine Automatisierungsprogramm (17a, 17b) zur Ausbildung einer Datenverbindung mit einem auf einer externen Recheneinrichtung ablaufenden weiteren Automatisierungsprogramm dient.

7. Kommunikationsgerät (10) nach einem der vorangehenden Ansprüche,
**dadurch gekennzeichnet, dass**
- das zumindest eine Automatisierungsprogramm (17a, 17b) zur Ausführung einer Schutzfunktion oder einer Steuerfunktion für ein Gerät der Energieautomatisierungsanlage dient.

8. Kommunikationsgerät (10) nach einem der vorangehenden Ansprüche,
**dadurch gekennzeichnet, dass**
- das Kommunikationsgerät (10) Bestandteil eines elektrischen Energiezählers ist.

## Claims

1. Communication device (10) for operation in a power automation installation, which is designed to control and/or monitor electrical devices of an electrical power supply network, having communication part (C), which
- comprises a first communication port (12) that is configured to transfer data packets between the communication device (10) and external data processing equipment (15);
- comprises at least two further communication ports (13a-13d) that are configured to transfer data packets with network devices within a communication network;
- comprises communication changeover equipment (11) that is configured to transfer data packets between the first communication port (12) and at least one of the further communication ports (13a-13d); and
- comprises a computing unit that is configured to control the communication changeover equipment (11),
**characterized in that**
- the communication device (10) comprises an application part (A), which comprises at least one device connection (19a-19d) that is configured to connect the communication device (10) to an electrical device of the power automation installation, which electrical device is electrically connected to the power supply network;
- comprises a data memory area into which any desired automation programs (17a, 17b) can be installed in such a way that they effectuate automation functions of the power automation installation when executed by the computing unit, in such a way that they exchange data and signals with the electrical device via the at least one device connection in order to control and/or monitor the electrical device; and
- comprises a program interface (16) coupled to the communication changeover equipment (11) and configured to establish a connection between the communication changeover equipment (11) and at least one automation program (17a, 17b) installed in the memory area.

2. Communication device (10) according to Claim 1,
**characterized in that**
- server equipment (20) is made available in the communication device (10), which is configured to store results data of the at least one automation program (17a, 17b) and to make the results data available when requested by the external data processing equipment (15).

3. Communication device (10) according to Claim 2,
**characterized in that**
- the server equipment (20) is configured to make the results data available according to the IEC 61850 standard.

4. Communication device (10) according to one of the preceding claims,
**characterized in that**
- the communication device (10) comprises a fixed number of interfaces; and
- the communication device (10) comprises a configuration file that specifies which of the interfaces are communication ports (13a-13d) and which of the interfaces are device connections (19a-19d).

5. Communication device (10) according to one of the preceding claims,
**characterized in that**
- the at least one automation program (17a, 17b) comprises set-up parameters that contain communication settings for the respective device connections (19a-19d) associated with the at least one automation program (17a, 17b).

6. Communication device (10) according to one of the preceding claims,
**characterized in that**
- the at least one automation program (17a, 17b) serves to establish a data connection with a further automation program running on external computing equipment.

7. Communication device (10) according to one of the preceding claims,
**characterized in that**
- the at least one automation program (17a, 17b) serves to execute a safety function or a control function for a device of the power automation installation.

8. Communication device (10) according to one of the preceding claims,
**characterized in that**
- the communication device (10) is a component of an electrical energy meter.

## Revendications

1. Appareil (10) de communication destiné à fonctionner dans un système d' automatisation d' énergie, qui est constitué pour commander et/ou contrôler des appareils électriques d' un réseau d' alimentation en énergie électrique, comprenant une partie (C) de communication, qui
- a un premier accès (12) de communication, conçu pour transmettre des paquets de données entre l' appareil (10) de communication et un dispositif (15) extérieur de traitement de données;
- a au moins deux autre accès (13a-13d) de communication, conçus pour transmettre des paquets de données par des appareils du réseau au sein d' un réseau de communication;
- a un dispositif (11) de commutation de communication, conçu pour transmettre des paquets de données entre le premier accès (12) de communication et au moins l' un des autres accès (13a-13d) de communication et
- a une unité de calcul, conçue pour commander le dispositif (11) de commutation de communication,
**caractérisé en ce que**
l' appareil (10) de communication a une partie (A) d' application, qui
- a au moins une borne (19a-19d) d' appareil, conçue pour relier l' appareil (10) de communication à un appareil électrique du système d' automatisation d' énergie, appareil qui est en liaison électriquement avec le réseau d' alimentation en énergie;
- a une partie de mise en mémoire de données, dans laquelle des programmes (17a, 17b) quelconques d' automatisation peuvent être installés, de manière à provoquer, lors de l' élaboration par l'unité de calcul, des fonctions d' automatisation du système d' automatisation d' énergie, de façon à ce que, pour la commande et/ou le contrôle de l' appareil électrique, ils échangent avec l'appareil électrique des données et des signaux par la au moins une borne d' appareil et
- a une interface (16) de programme, qui est couplée au dispositif (11) de commutation de communication et qui est conçue pour établir une liaison entre le dispositif (11) de commutation de communication et au moins un programme (17a, 17b) d' automatisation installé dans la partie de mémoire.

2. Appareil (10) de communication suivant la revendication 1,
**caractérisé en ce que**
- il est mis à disposition, dans l'appareil (10) de communication, un dispositif (20) serveur, conçu pour la mise en mémoire de données de résultat du au moins un programme (17a, 17b) d' automatisation et pour la mise à disposition des données de résultat, en vue qu' elles soient appelées par le dispositif (15) extérieur de traitement de données.

3. Appareil (10) de communication suivant la revendication 2,
**caractérisé en ce que**
- le dispositif (20) serveur est conçu pour la mise à disposition des données de résultat suivant la norme IEC 61850.

4. Appareil (10) de communication suivant l'une des revendications précédentes,
**caractérisé en ce que**
- l'appareil (10) de communication a un nombre fixe d' interfaces et
- l'appareil (10) de communication comprend un fichier de configuration, dans lequel sont fixées les interfaces, qui sont des accès (13a-13d) de communication, et les interfaces, qui sont des bornes (19a-19d) d' appareil.

5. Appareil (10) de communication suivant l'une des revendications précédentes,
**caractérisé en ce que**
- le au moins un programme (17a, 17b) d' automatisation comprend des paramètres de dispositif, qui contiennent les réglages de communication pour les bornes (19a-19d) d' appareil, reliées au au moins un programme (17a, 17b) d' automatisation.

6. Appareil (10) de communication suivant l'une des revendications précédentes,
**caractérisé en ce que**
- le au moins un programme (17a, 17b) d' automatisation sert à la constitution d'une liaison de données avec un autre programme d' automatisation se déroulant sur un dispositif de calcul extérieur.

7. Appareil (10) de communication suivant l'une des revendications précédentes,
**caractérisé en ce que**
- le au moins un programme (17a, 17b) d' automatisation sert à l'exécution d'une fonction de protection ou d'une fonction de commande d' un appareil du système d' automatisation d' énergie.

8. Appareil (10) de communication suivant l'une des revendications précédentes,
**caractérisé en ce que**
- l'appareil (10) de communication fait partie d' un compteur d' énergie électrique.
